# EUROPEAN PATENT SPECIFICATION

(11) **EP 0 375 324 B1**
(45) Date of publication and mention of the grant of the patent: **02.02.1994**
(21) Application number: 89313209.2
(22) Date of filing: 18.12.1989
(51) Int. Cl.: C07F 9/165, C10M 137/08, C10M 137/10

(54) **Production of phosphorothioate salts**
Herstellung von Thiophosphatsalzen
Préparation de sels de phosphorothioates

(30) Priority: 19.12.1988 GB 8829597
(43) Date of publication of application: 27.06.1990
(73) Proprietor: ETHYL PETROLEUM ADDITIVES LIMITED, Bracknell, Berkshire RG12 2UW (GB)
(72) Inventor: James, Barrie D., Wokingham Berkshire RG11 2PG (GB); Scattergood, Roger, Reading Berkshire RG7 1DP (GB)
(74) Representative: Collier, Jeremy Austin Grey

(56) References cited:
- DE-A- 2 838 933
- US-A- 2 447 288
- US-A- 2 647 140

## Description

This invention relates to the production of amine salts of phosphorothioic acids, and to the salts so produced.

Amine salts of phosphorothioic acids are useful inter alia as additives for lubricants, for example as antiwear additives. They may also be used in fuels. They have previously been made by reaction of a phosphite ester first with sulphur and then with the desired amine or amines. Reference may be made for example to the processes described in United States Patents Nos. 2647140, 4600543, 4717491 and 4755311. It is desirable to operate the reaction without the use of a solvent in order to avoid the expense of providing and then removing the latter.

The reaction between the phosphite ester and the sulphur is very exothermic, and it has been found that the reaction sometimes proceeds in an uncontrollably exothermic manner which can lead to breakage of equipment, loss of product, and danger to personnel. There is therefore a need to be able to produce amine salts of phosphorothioic acid in a way which is easily controlled and gives a high yield of the desired product generally suitable for use, e.g. in lubricant compositions, without further processing.

In addition, products produced in accordance with the prior processes are impure and do not in practice contain more than about 90% of the stoichiometric product. Moreover, they contain undesirable impurities such as reactive sulphur, which causes undesirable haze and corrosion of copper surfaces with which it comes in contact, and appreciable amounts of unreacted phosphite starting material (or amine salt thereof) which is liable to hydrolyse and lead to corrosion-producing products.

The present invention provides a new process which is easier to control than the previously used process and gives a high yield of the desired product. The process is capable of giving a product which is at least 95% pure, does not contain any corrosion-causing, reactive sulphur, and has a substantially reduced content of unreacted phosphite starting material (or amine salt thereof).

The present invention provides a process for the production of an amine salt of a phosphorothioic acid, more particularly of formula:

(RO)₂PSO⁻.HN⁺R₁R₂R₃

in which the radicals R are the same or different and each is a substituted or unsubstituted hydrocarbyl radical of up to 20 carbon atoms each, e.g. alkyl, cycloalkyl, alkenyl, aryl or alkylaryl of up to 18 carbon atoms, and especially straight or branched alkyl or alkenyl of up to 12, preferably 3 to 8, carbon atoms, or phenyl, and R₁, R₂ and R₃ are each hydrogen or substituted or unsubstituted hydrocarbyl radicals of up to 22 carbon atoms each, e.g. saturated or unsaturated aliphatic or cycloaliphatic radicals of up to 22 carbon atoms each, not more than two of R₁, R₂ and R₃ being hydrogen, which comprises
(1) forming a mixture of sulphur, preferably in finely divided state, and the required amine or amines of formula NR₁R₂R₃ in the liquid state,
(2) adding to the said mixture a phosphite ester of formula (RO)₂POH (or a mixture of such esters) in an amount at least equivalent on a molar basis to the amount of sulphur in said mixture under conditions such that the sulphur reacts with the said ester and the reaction temperature does not rise above 130°C,
(3) continuing said reaction until solid sulphur has substantially disappeared from the reaction mixture, and, if necessary,
(4) adding additional amine so that the total molar quantity of amine present is at least equivalent to the molar quantity of the phosphite ester used.

The invention also provides, as novel products, amine salts of phosphorothioic acids of formula:

(RO)²PSO⁻.HN⁺R₁R₂R₃

in which R, R₁, R₂ and R₃ are as hereinbefore defined except that none of R, R₁, R₂ and R₃ is a substituted hydrocarbyl group, the said salt being a liquid, having a purity of at least 95% (as measured by ³¹P NMR) and containing no reactive sulphur and less than 3% unreacted phosphite of formula:

(RO)₂POH (also written (RO)₂P(O)H)

or amine salt thereof. The substantial absence of reactive sulphur (i.e. sulphur, whether free or bound, capable of causing corrosion of copper surfaces with which the product comes in contact) may be demonstrated for example by the ASTM D-130 copper corrosion test.

In the operation of the new process, it is not necessary that all the amine required for formation of the desired salt should be initially present, but the amount initially mixed with the sulphur must be sufficient to provide a liquid reaction medium in which the sulphur can be well dispersed. More particularly, if it is desired to produce a mixed amine salt, then the less volatile amine may be used to form the initial reaction mixture and the more volatile amine added after the reaction of the sulphur with the phosphite has taken place.

The amine, sulphur and phosphite are preferably used in substantially stoichiometric quantities, but in order to avoid the presence of free sulphur in the reaction product it may be desirable to use a small excess of the phosphite ester, e.g. up to 1.1 molar equivalent of ester per molar equivalent of sulphur, and also a slight excess of amine, e.g. up to 1.2 molar equivalent of amine per molar equivalent of phosphite.

Where the amine starting material is solid at ambient temperature it may be desirable to melt it before the sulphur is added. Since amines react with sulphur and may form dark coloured products with an obnoxious odour, it is desirable to form the mixture of amine and sulphur at a temperature which is as low as possible consistent with maintaining the amine in the liquid state. The addition of a phosphite ester should begin as soon as possible after the amine and sulphur have been mixed, since once the phosphite is present in the reaction mixture, undesired reaction between the amine and the sulphur is apparently suppressed. However, it has been found that at temperatures below about 30°C, undesirable reactions between the amine and the sulphur proceed only very slowly. At temperatures above about 80°C, on the other hand, the amine and the sulphur react sufficiently rapidly to result in an undesirably dark end product with an objectionable odour.

The phosphite ester may be added to the mixture of amine (or amines) and sulphur in portions or continuously. Since the reaction is exothermic, the rate of addition of the phosphite is controlled so as to maintain the temperature of the reaction mixture at not more than 130°C, preferably below 90°C, and more preferably in the range of about 50 to 80°C.

At the end of the addition of the phosphite the reaction mixture is preferably maintained at the reaction temperature for a short period, e.g. up to 30 minutes, in order to ensure that all the sulphur present in the reaction mixture has reacted. The presence of unreacted sulphur may be detected by visual inspection since it is normally the only solid ingredient in the reaction medium. The product can generally be used without further processing.

The preferred amines for use in the present invention are saturated or unsaturated aliphatic or cycloaliphatic amines in which each of R₁, R₂ and R₃, which may be the same or different, is hydrogen or is an alkyl, cycloalkyl or alkenyl radical of 4 to 22 carbon atoms, not more than two of R₁, R₂ and R₃ being hydrogen. Primary amines are generally preferred. Mixtures of amines can be used and this can confer additional desirable properties in the product. Examples of suitable amines are primary amines such as n-butylamine, n-hexylamine, n-octylamine, n-dodecylamine, n-octadecylamine, oleylamine, 2-ethyl-n-hexylamine, t-butyl primary amine, and t-octyl primary amine, secondary amines such as di-n-octylamine and dicyclohexylamine, and tertiary amines such as N,N-dimethyl-n-octylamine. Amines derived from natural products and which therefore contain mixtures of hydrocarbyl radicals can also be used, e.g. the primary aliphatic amines usually called cocoamine and tallow amine. Commercially available mixed amines are also suitable, e.g. the products sold under the trade names Primene 81-R and Primene JM-T (stated by the manufacturers Rohm and Haas to be respectively mixed tertiary C₁₂-C₁₄ alkyl primary amines and mixed tertiary C₁₆-C₂₂ alkyl primary amines).

The preferred phosphite esters are dialkyl, dialkenyl, diphenyl, or di-(alkylphenyl) phosphites (in which the said alkyl and alkenyl radicals contain up to 18 carbon atoms each and the said alkylphenyl radical has up to 12 carbon atoms in the alkyl). Examples of suitable phosphites are dimethyl, di-n-butyl, di-n-octyl, di-2-ethyl-n-hexyl, dioleyl, diphenyl and di(dodecylphenyl) phosphite. Mixtures of phosphite esters can be used.

The following Examples illustrate the invention.

### EXAMPLE I

Primene 81-R (158 g) is placed in a 1 litre flask at room temperature (about 20°C). Sulphur (finely powdered, 22.8 g) is then added to the amine and thoroughly mixed in. The addition of di-phenylphosphite (175.5 g) is begun immediately. The phosphite is added at a rate such that the temperature of the reaction mixture rises to about 65°C over 15 minutes. The rate of addition of the phosphite is then adjusted so as to maintain a temperature of 60°-70°C during the remainder of the addition.

The reaction mixture is maintained at 60 to 70°C for a further thirty minutes. The product is then cooled and is ready for use.

### EXAMPLE II

Primene 81-R (59.1 g) and oleylamine (144.5 g) are placed in a 1 litre flask and the temperature of the mixture is adjusted to 30°C. Sulphur (finely powdered, 23.9 g) is added and thoroughly mixed in. Di-n-butylphosphite (149.4 g) is added slowly. When the temperature of the mixture has increased to about 65°C the rate of addition of the phosphite is reduced to maintain the temperature in the range 60-70°C. At the end of the addition, stirring is continued for 30 minutes and the mixture allowed to cool. It can be used without further processing.

### EXAMPLE III

The procedure of Example II is repeated using oleylamine (227 g) in place of the mixture of Primene 81-R and oleylamine. A similar product is obtained.

### EXAMPLE IV

The procedure of Example II is repeated using coco amine (180 g), sulphur (30 g) and dioleylphosphite (582 g). After the addition of the phosphite is complete and while the mixture is at 60-70°C, n-octylamine (32 g) is added. At the end of the addition, the temperature is maintained at 60-70°C for a further 30 minutes and the mixture is then allowed to cool. The product can be used without further processing.

### EXAMPLE V

The procedure of Example II is repeated using N,N-dimethyldodecylamine (200 g), sulphur (23.2 g) and di-n-butylphosphite (151 g). A similar product is obtained.

### EXAMPLE VI

The procedure of Example II is repeated using oleylamine (294.8 g), sulphur (30.4 g) and dimethylphosphite (110 g). The product can be used without further processing.

### EXAMPLE VII

Example I was repeated using 414.5g of Primene 81-R, 55.1g of sulphur, and 480.4g of technical grade di-phenylphosphite (Aldrich Chemical Co.). The reaction temperature was maintained at 80°C.

For comparison, the same starting materials in the same quantities were reacted together using the procedure described in Example 1 of USP 4600543 (i.e. by adding the amine to a stirred mixture of the phosphite and the sulphur), the reaction temperature being again maintained at 80°C throughout.

The two products were examined by ³¹P NMR to measure in each the relative proportions, as percentages based on the total phosphorus content, of the phosphorus present as the desired salt, the phosphorus present as diphenyl phosphite, and the phosphorus present in other phosphorus compounds. The following results were obtained:

| Phosphorus Compound | Percentage of total phosphorus compounds | |
|---|---|---|
| | Process of the invention | Process of USP 4600543 |
| Primene 81-R salt of diphenyl phosphorothioate | 95 | 91 |
| Diphenyl phosphite | 2.5 | 3.8 |
| Other phosphorus-containing compounds | 2.5 | 5.2 |

The two products were also examined by the ASTM D-130 copper strip test. In this test, which provides a measure of the tendency of the tested material to corrode copper, a clean copper strip is placed in the material under test for 3 hours at 100°C. The strip is then withdrawn and compared with a standard. The following results were obtained:

| | |
|---|---|
| Product of the invention | 1A |
| Product of the process of USP 4600543 | 4B |

1A means that the withdrawn strip was almost clean (substantially no corrosion) while 4B means that the withdrawn strip was black (substantial corrosion).

In a further test, the two products were subjected to the Cincinatti Milacron thermal stability test (procedure A). A hydraulic oil was formulated using 0.6% of a hydraulic package in 150 solvent neutral paraffinic lubricant basestock so that it contained 0.1% of the product under test, together with usual amounts of other additives such as, in particular, antioxidants, other extreme pressure additives, and corrosion inhibitors. The test was carried out by heating 200 ml of the oil in a 250 ml beaker in an oven at 135°C for 168 hours. A copper and an iron rod are placed in the oil, crossed that they touch. At the end of the test the rods were rated visually. The results were as follows:

| | Product of the invention | Product of the process of USP 4600543 |
|---|---|---|
| Iron rod rating | 1 (pass) | 4 (fail) |
| Copper rod rating | 5 (pass) | 5 (pass) |

## Claims

1. Process for the preparation of an amine salt of a phosphorothioic acid of formula:
(RO)₂PSO⁻.HN⁺R₁R₂R₃
in which the radicals R are the same or different and each is a substituted or unsubstituted hydrocarbyl radical of up to 20 carbon atoms and R₁, R₂ and R₃ are each hydrogen or substituted or unsubstituted hydrocarbyl radicals of up to 22 carbon atoms, not more than two of R₁, R₂ and R₃ being hydrogen, which comprises:
(1) forming a mixture of sulphur and an amine or amine mixture of formula NR₁R₂R₃ in the liquid state,
(2) adding to the mixture so obtained a phosphite ester of formula
(RO)₂POH
in an amount at least equivalent on a molar basis to the amount of sulphur in said mixture under conditions such that the sulphur reacts with the said ester and the reaction temperature does not rise above 130°C,
(3) continuing said reaction until solid sulphur has substantially disappeared from the reaction mixture, and, if necessary,
(4) adding additional amine so that the total molar quantity of amine present is at least equivalent to the molar quantity of the phosphite ester used.

2. Process according to claim 1 in which, in the phosphite ester, each of the R radicals is an alkyl, cycloalkyl, alkenyl, aryl or alkylaryl radical of up to 18 carbon atoms.

3. Process according to claim 1 in which R is alkyl of 3 to 8 carbon atoms or phenyl.

4. Process according to claim 1 in which R is n-butyl, n-octyl, 2-ethyl-n-hexyl, or phenyl.

5. Process according to any of claims 1 to 4 in which, in the amine, each of R₁, R₂ and R₃ is hydrogen or an alkyl, cycloalkyl or alkenyl radical of 4 to 22 carbon atoms.

6. Process according to claim 5 in which the amine is n-butylamine, n-hexylamine, n-octylamine, n-dodecylamine, n-octadecylamine, oleylamine, 2-ethyl-n-hexylamine, t-butyl primary amine, t-octyl primary amine, di-n-octylamine, dicyclohexylamine, N,N-dimethyl-n-octylamine, cocoamine, tallow amine, mixed tertiary C₁₂ - C₁₄ alkyl primary amines, or mixed tertiary c₁₆ - c₂₂ alkyl primary amines.

7. Process according to any one of claims 1 to 6 in which the reaction temperature is 50-80°C.

8. Process according to any one of claims 1 to 7 in which for each molar equivalent of sulphur the total quantity of phosphite ester used is 1 to 1.1 molar equivalent and the total quantity of amine used is 1 to 1.2 molar equivalent per molar equivalent of phosphite.

9. An amine salt of a phosphorothioic acid of formula:
(RO)₂PSO⁻.HN⁺R₁R₂R₃
in which R, R₁, R₂ and R₃ are unsubstituted radicals as defined in claim 1 the said salt being a liquid, having a purity of at least 95%, and containing no reactive sulphur and less than 3% phosphite of formula:
(RO)₂POH
in which R is as defined in claim 1, or amine salt thereof.

10. An amine salt according to claim 9 in which R is alkyl of 3 to 8 carbon atoms or phenyl.

11. An amine salt according to claim 9 or 10 in which each of R₁, R₂ and R₃ is hydrogen or an alkyl, cycloalkyl or alkenyl radical of 4 to 22 carbon atoms, not more than two of R₁, R₂ and R₃ being hydrogen.

12. An amine salt according to claim 11 in which the amine is n-butylamine, n-hexylamine, n-octylamine, n-dodecylamine, n-octadecylamine, oleylamine, 2-ethyl-n-hexylamine, t-butyl primary amine, t-octyl primary amine, di-n-octylamine, dicyclohexylamine, N,N-dimethyl-n-octylamine, cocoamine, tallow amine, mixed tertiary C₁₂ - C₁₄ alkyl primary amines, or mixed tertiary C₁₆ - C₂₂ alkyl primary amines.

13. An amine salt according to claim 9 in which R is phenyl, R₁ and R₂ are hydrogen, and R₃ is mixed C₁₂ - C₁₄ tertiary alkyl.

## Patentansprüche

1. Verfahren zur Herstellung eines Aminsalzes einer Thiophosphorsäure der Formel:
(RO)₂PSO⁻ · HN⁺R₁R₂R₃
in welcher die Reste R gleich oder verschieden sind und jeweils einen substituierten oder unsubstituierten Kohlenwasserstoffrest von bis zu 20 Kohlenstoffatomen und die Reste R₁, R₂ und R₃ jeweils Wasserstoff oder substituierte oder unsubstituierte Kohlenwasserstoffreste von bis zu 22 Kohlenstoffatomen bedeuten, wobei nicht mehr als 2 von R₁, R₂ und R₃ Wasserstoff sind, bei dem man
(1) ein Gemisch aus Schwefel und einem Amin oder einem Aminägemisch der Formel NR₁R₂R₃ in flüssigem Zustand herstellt,
(2) dem erhaltenen Gemisch einen Phosphitester der Formel
(RO)₂POH
in einer Menge zusetzt, welche auf Basis des Molverhältnisses im Vergleich zum Schwefelanteil in dieser Mischung mindestens äquivalent ist, und zwar unter solchen Bedingungen, daß der Schwefel mit dem Ester reagiert und die Reaktionstemperatur 130°C nicht übersteigt,
(3) die Reaktion fortsetzt, bis der feste Schwefel im wesentlichen aus dem Reaktionsgemisch verschwunden ist und falls nötig,
(4) zusätzliches Amin hinzufügt, so daß die vorhandene molare Gesamtmenge des Amins zur molaren Menge des eingesetzten Phosphitesters mindestens äquivalent ist.

2. Verfahren nach Anspruch 1, worin im Phosphitester die Reste R jeweils ein Alkyl-, Cycloalkyl-, Alkenyl-, Aryl- oder Alkylarylrest mit bis zu 18 Kohlenstoffatomen bedeuten.

3. Verfahren nach Anspruch 1, worin R Alkyl mit 3 bis 8 Kohlenstoffatomen oder Phenyl bedeutet.

4. Verfahren nach Anspruch 1, worin R n-Butyl, n-Octyl, 2-Ethyl-n-hexyl oder Phenyl bedeutet.

5. Verfahren nach einem der Ansprüche 1 bis 4, worin im Amin R₁, R₂ und R₃ jeweils Wasserstoff oder einen Alkyl-, Cycloalkyl- oder Alkenylrest mit 4 bis 22 Kohlenstoffatomen bedeutet.

6. Verfahren nach Anspruch 5, worin das Amin n-Butylamin, n-Hexylamin, n-Octylamin, n-Dodecylamin, n-Octadecylamin, Oleylamin, 2-Ethyl-n-hexylamin, prim. t-Butylamin und prim. t-Octylamin, Di-n-octylamin, Dicyclohexylamin, N,N-Dimethyl-n-octylamin, Kokosfettamin und Talgfettamin, oder ein Gemisch aus primären t-C₁₂-C₁₄-Alkylaminen oder primären t-C₁₆-C₂₂-Alkylaminen ist.

7. Verfahren nach einem der Ansprüche 1 bis 6, worin die Reaktionstemperatur 50 - 80°C beträgt.

8. Verfahren nach einem der Ansprüche 1 bis 7, worin für jedes Moläquivalent an Schwefel die Gesamtmenge an eingesetztem Phosphit 1 bis 1,1 Moläquivalente beträgt und die Gesamtmenge an eingesetztem Amin 1 bis 1,2 Moläquivalente pro Moläquivalent Phosphit beträgt.

9. Aminsalz einer Thiophosphorsäure der Formel:
(RO)₂PSO⁻ · HN⁺R₁R₂R₃
in welcher R, R₁, R₂ und R₃ unsubstituierte Reste nach Anspruch 1 darstellen, wobei das Salz in flüssiger Form vorliegt und einen Reinheitsgrad von mindestens 95% aufweist sowie keinen reaktionsfähigen Schwefel und weniger als 3% Phosphit der Formel
(RO)₂POH
enthält, worin R die in Anspruch 1 definierte Bedeutung hat oder ein Aminsalz davon.

10. Aminsalz nach Anspruch 9, bei dem R Alkyl mit 3 bis 8 Kohlenstoffatomen oder Phenyl bedeutet.

11. Aminsalz nach Anspruch 9 oder 10, worin R₁, R₂ und R₃ jeweils Wasserstoff oder einen Alkyl-, Cycloalkyl- oder Alkenylrest mit 4 bis 22 Kohlenstoffatomen bedeutet, wobei nicht mehr als zwei von R₁, R₂ und R₃ Wasserstoff sind.

12. Aminsalz nach Anspruch 11, worin das Amin n-Butylamin, n-Hexylamin, n-Octylamin, n-Dodecylamin, n-Octadecylamin, Oleylamin, 2-Ethyl-n-hexylamin, prim. t-Butylamin und prim. t-Octylamin, Di-n-octylamin, Dicyclohexylamin, N,N-Dimethyl-n-octylamin, Kokosfettamin, Talgfettamin, oder ein Gemisch aus primären t-C₁₂-C₁₄-Alkylaminen oder primären t-C₁₆-C₂₂-Alkylaminen ist.

13. Aminsalz nach Anspruch 9, in dem R Phenyl, R₁ und R₂ Wasserstoff und R₃ ein Gemisch aus t-C₁₂-C₁₄-Alkyl bedeuten.

## Revendications

1. Procédé de préparation d'un sel d'amine d'un acide phosphorothioïque de formule :
(RO)₂PSO⁻.HN⁺R₁R₂R₃
dans laquelle les radicaux R sont identiques ou différents et représentent chacun un radical hydrocarbyle substitué ou non substitué ayant jusqu'à 20 atomes de carbone et R₁, R₂ et R₃ représentent chacun l'hydrogène ou un radical hydrocarbyle substitué ou non substitué ayant jusqu'à 22 atomes de carbone, pas plus de deux des radicaux R₁, R₂ et R₃ ne représentant l'hydrogène, qui comprend :
(1) la formation d'un mélange de soufre et d'une amine ou d'un mélange d'amines de formule NR₁R₂R₃ à l'état liquide,
(2) l'addition au mélange ainsi obtenu d'un ester du type phosphite, de formule
(RO)₂POH
en une quantité au moins équivalente, sur base molaire, à la quantité de soufre dans ledit mélange dans des conditions telles que le soufre réagisse avec ledit ester et la température réactionnelle ne s'élève pas au-dessus de 130°C,
(3) le maintien de la conduite de ladite réaction jusqu'à ce que le soufre solide ait pratiquement disparu du mélange réactionnel, et, si nécessaire,
(4) l'addition d'une quantité supplémentaire d'amine de telle sorte que la quantité molaire totale d'amine présente soit au moins équivalente à la quantité molaire utilisée de l'ester du type phosphite.

2. Procédé suivant la revendication 1, dans lequel, dans l'ester du type phosphite, chacun des radicaux R représente un radical alkyle, cycloalkyle, alcényle, aryle ou alkylaryle ayant jusqu'à 18 atomes de carbone.

3. Procédé suivant la revendication 1, dans lequel R représente un groupe alkyle ayant 3 à 8 atomes de carbone ou un groupe phényle.

4. Procédé suivant la revendication 1, dans lequel R représente un groupe n-butyle, n-octyle, 2-éthyl-n-hexyle ou phényle.

5. Procédé suivant l'une quelconque des revendications 1 à 4, dans lequel, dans l'amine, chacun des radicaux R₁, R₂ et R₃ représente l'hydrogène ou un radical alkyle, cycloalkyle ou alcényle ayant 4 à 22 atomes de carbone.

6. Procédé suivant la revendication 5, dans lequel l'amine est la n-butylamine, la n-hexylamine, la n-octylamine, la n-dodécylamine, la n-octadécylamine, l'oléylamine, la 2-éthyl-n-hexylamine, la tertio-butylamine primaire, la tertio-octyle amine primaire, la di-n-octylamine, la dicyclohexylamine, la N,N-diméthyl-n-octylamine, l'amine dérivée du coprah, l'amine dérivée du suif, des amines primaires tertio-alkyliques mixtes en C₁₂-C₁₄ ou des amines primaires tertio-alkyliques mixtes en C₁₆-C₂₂.

7. Procédé suivant l'une quelconque des revendications 1 à 6, dans lequel la température réactionnelle est comprise dans l'intervalle de 50 à 80°C.

8. Procédé suivant l'une quelconque des revendications 1 à 7, dans lequel, pour chaque équivalent molaire de soufre, la quantité totale utilisée d'ester du type phosphite va de 1 à 1,1 équivalent molaire et la quantité totale d'amine utilisée va de 1 à 1,2 équivalent molaire par équivalent molaire de phosphite.

9. Sel d'amine d'un acide phosphorothioïque de formule :
(RO)₂PSO⁻.HN⁺R₁R₂R₃
dans laquelle R, R₁, R₂ et R₃ représentent des radicaux non substitués répondant à la définition suivant la revendication 1, le sel étant un liquide ayant une pureté d'au moins 95 % et ne contenant aucune quantité de soufre réactif et contenant moins de 3 % d'un phosphite de formule :
(RO)₂POH
dans laquelle R répond à la définition suivant la revendication 1, ou de son sel d'amine.

10. Sel d'amine suivant la revendication 9, dans lequel R représente un groupe alkyle ayant 3 à 8 atomes de carbone ou un groupe phényle.

11. Sel d'amine suivant la revendication 9 ou 10, dans lequel chacun des radicaux R₁, R₂ et R₃ représente l'hydrogène ou un radical alkyle, cycloalkyle ou alcényle ayant 4 à 22 atomes de carbone, pas plus de deux des radicaux R₁, R₂ et R₃ ne représentant l'hydrogène.

12. Sel d'amine suivant la revendication 11, dans lequel l'amine est la n-butylamine, la n-hexylamine, la n-octylamine, la n-dodécylamine, la n-octadécylamine, l'oléylamine, la 2-éthyl-n-hexylamine, la tertio-butylamine primaire, la tertio-octylamine primaire, la di-n-octylamine, la dicyclohexylamine, la N,N-diméthyl-n-octylamine, l'amine dérivée du coprah, l'amine dérivée du suif, des amines primaires tertio-alkyliques mixtes en C₁₂ à C₁₄ ou des amines primaires tertio-alkyliques mixtes en C₁₆ à C₂₂.

13. Sel d'amine suivant la revendication 9, dans lequel R représente un groupe phényle, R₁ et R₂ représentent l'hydrogène et R₃ représente un groupe tertio-alkyle mixte en C₁₂-C₁₄.
